(19) Europäisches Patentamt

European Patent Office

Office européen des brevets

(11) **EP 0 548 692 B1**

(12) **EUROPÄISCHE PATENTSCHRIFT**

(45) Veröffentlichungstag und Bekanntmachung des Hinweises auf die Patenterteilung:
**26.03.1997 Patentblatt 1997/13**

(51) Int Cl.6: **C08K 5/10**, C08L 59/02

(21) Anmeldenummer: **92121078.7**

(22) Anmeldetag: **10.12.1992**

(54) **Polyacetalformmassen und deren Verwendung**

Polyacetal resin and its use

Résin de polyacétal et son emploi

(84) Benannte Vertragsstaaten:
**BE DE ES FR GB IT NL**

(30) Priorität: **12.12.1991 DE 4140898**

(43) Veröffentlichungstag der Anmeldung:
**30.06.1993 Patentblatt 1993/26**

(73) Patentinhaber: HOECHST
**AKTIENGESELLSCHAFT**
**65926 Frankfurt am Main (DE)**

(72) Erfinder:
- **Fleischer, Dietrich, Dr.**
  **W-6100 Darmstadt (DE)**
- **Kirst, Andreas**
  **W-6230 Frankfurt am Main 80 (DE)**
- **Kohlhepp, Klaus**
  **W-6239 Eppstein/Ts. (DE)**
- **Sabel, Hans-Dieter, Dr.**
  **W-6240 Königstein/Ts. (DE)**

(56) Entgegenhaltungen:
EP-A- 0 110 108     EP-A- 0 172 691
EP-A- 0 340 931     EP-A- 0 372 681
EP-A- 0 430 215     DE-A- 2 808 675

- **Derwent Publications Ltd., London, GB; AN 88-240202 & JP-A-63 175 069**

**Beschreibung**

Die Erfindung bezieht sich auf Polyacetalformmassen, die eine verringerte Neigung zum Schmelzenbruch aufweisen und deren Verwendung.

Polyacetale haben sich sowohl wegen ihrer Eigenschaften als auch ihrer problemlosen Verarbeitbarkeit einen festen Platz unter den technischen Kunststoffen erworben.

Polyacetale lassen sich nach allen für Thermoplaste gebräuchlichen Verfahren verarbeiten; in der Praxis angewandt werden ganz überwiegend der Spritzguß sowie die Extrusion.

Trotz der erwähnten Verarbeitungsbreite stellt sich häufig die Aufgabe, bestimmte Eigenschaften der Polyacetalschmelzen, z.B. ihre kritische Schergeschwindigkeit, gezielt zu beeinflussen, um den Polyacetalen neue Anwendungsgebiete zu erschließen oder in bestehenden Anwendungsgebieten die Produktivität zu verbessern.

Es ist bekannt, daß es sowohl bei der Spritzgieß- wie auch bei der Extrusionsverarbeitung zu Oberflächendefekten an den Formteilen infolge Schmelzenbruchs kommen kann. Ursache für den Schmelzenbruch ist eine Unstetigkeit in der Fließcharakteristik oberhalb einer bestimmten, der sogenannten kritischen Schergeschwindigkeit.

Schmelzenbruch hängt grundsätzlich von der Viskosität der Schmelze sowie der chemischen Struktur des Polymeren ab und ist eine Funktion des dynamischen Elastizitätsmoduls der Schmelze.

Das Vermeiden von Schmelzenbruch erfordert eine Herabsetzung der Schmelzenelastizität, d.h. ein Anheben der kritischen Schergeschwindigkeit.

Additive zur gewünschten Beeinflussung des Fließverhaltens von Polyacetalschmelzen sind im allgemeinen bekannt; zu nennen sind beispielsweise Calciumstearat, Zinkstearat und Bis-(N,N'-stearoyl)-ethylendiamin. Die bisher bekannten Systeme erfordern für eine ausreichende Wirksamkeit aber relativ hohe Einsatzkonzentrationen, im allgemeinen werden z.B. 0,2 Gew.-% der genannten Additive verwendet. Selbst diese Menge ist jedoch für manche Einsatzgebiete noch nicht ausreichend.

Versucht man nun, die kritische Schergeschwindigkeit durch erhöhte Konzentration der genannten Verbindungen zu höheren Werten zu verschieben, so ist dies mit folgenden Nachteilen verbunden:

- Verschlechterung des Einzugsverhaltens in Extruder/Spritzgießmaschine
- Gefahr der Bildung von Werkzeugbelag ("plate out")
- Verringerung der Durchsatzleistung der Verarbeitungsmaschine
- mögliche Bindenahtschwäche bei spritzgegossenen Formteilen.

Es ist auch bekannt, daß durch Zusatz von elektrisch leitfähigem Ruß und von (2 bis 20 Gew.-%) Polyethylen niedriger Dichte zum Polyacetal (Polyoxymethylen) antistatische Formmassen erhalten werden (DE-A 28 08 675). Weiterhin ist bekannt, daß ein abriebfestes Polyoxymethylen durch den Zusatz einer Kombination von drei Additiven erhalten wird, nämlich einem polyfunktionalen Isocyanat, einem Polyolefin mit H-aktiver funktionaler Gruppe sowie (0,2 bis 10 %) Polyethylen (EP-A 0 430 215). Abgesehen von der anderen Zusammensetzung der bekannten Formmassen gegenüber denen der vorliegenden Erfindung, ist auch der Einsatz dieser Mischungen auf andere Gebiete gerichtet.

Die Aufgabe der Erfindung bestand darin, Formmassen aus Polyacetalen und Additiven zu entwickeln, bei denen die Additive hinsichtlich der erwünschten Herabsetzung der Schmelzenelastizität in deutlich niedrigeren Konzentrationen wirksam sind, wobei die erwähnten Nachteile nicht auftreten.

Die Erfindung bezieht sich daher auf eine Polyacetalformmasse, die mindestens ein Additiv enthält, bei der als wirksames Additiv Polyethylenwachs in einer Menge von 0,003 bis 0,15, bevorzugt von 0,01 bis 0,12, insbesondere von 0,02 bis 0,10 Gew.-% bezogen auf das Gewicht der Formmasse, enthalten ist, mit der maßgabe, daß Diphenylmethandiisocyanat nicht vorhanden ist.

Die verwendeten Polymeren sind charakterisiert durch wiederkehrende Oxymethylen-Gruppen. Die Bezeichnung Polyoxymethylen schließt alle über 50 % der wiederkehrenden Einheiten -(CH$_2$O)- enthaltende Polymere wie Polyoxymethylen-Homopolymer, -Copolymer, -Terpolymer usw. ein. Das Polyoxymethylen kann Stabilisatoren einschließlich Formaldehydfänger, Antioxidantien, Lichtstabilisatoren, Antistatika, Farben, Pigmente, Ruß, andere Füllstoffe, Schlagzähmodifikatoren wie thermoplastische Polyurethane, Methylmethacrylat/Butadien/Styrol-Pfropfcopolymerisate oder Acrylnitril/Butadien/Styrol-Pfropfcopolymerisate, Verstärkungsmittel usw. enthalten. Vorzugsweise werden Copolymere aus Trioxan und 0,7 bzw. 2 % Ethylenoxid eingesetzt, die jeweils einen MFI-Wert 190/2,16 von 13 g/10 min bzw. 2,5 g/10 min aufweisen.

Die Polyethylen (PE)-Wachse gemäß der Erfindung sind Ethylen-Polymerisate hoher oder niedriger Dichte mit Molmassen von 3000 bis 9000 im Falle hoher Dichte bzw. um 2000 im Falle niedriger Dichte. Sie können in untergeordneten Anteilen polare Gruppen wie freie Carboxylgruppen und/oder deren Ester tragen und zeichnen sich dadurch aus, daß sie eine nach DIN 53402 gemessene Säurezahl von bis zu 35 mg KOH/g und/oder eine nach DIN 53401 gemessene Verseifungszahl von bis zu 50 mg KOH/g aufweisen.

2

Die Formmassen gemäß der Erfindung können weitere übliche Zusätze wie Füllstoffe, Verstärkungsmittel und Antistatika enthalten.

Meßmethode für das Schergeschwindigkeit/Schubspannungs-Diagramm (Fließkurve):

Die Schergeschwindigkeit wird nicht direkt gemessen, sondern aus den Versuchsbedingungen, rheologischen Daten und der Düsengeometrie berechnet. Die Untersuchungen wurden mit einem Hochdruck-Kapillar-Viskosimeter (HKV), Typ Rheograph 2001 der Firma Göttfert (Buchen , Bundesrepublik Deutschland) mit einer Lochdüse 10:1 durchgeführt. Die Schergeschwindigkeit wurde vorgegeben und variiert, indem man den Durchsatz der Polymerschmelze durch Auflegen unterschiedlicher Gewichte veränderte. Es stellte sich jeweils ein bestimmter Druck ein, der abgelesen und aus dem die Schubspannung berechnet wurde. Das resultierende Diagramm ist die Fließkurve.

Definition der kritischen Schergeschwindigkeit

Die kritische Schergeschwindigkeit läßt sich nach zwei verschiedenen Methoden definieren und somit auch bestimmen:

- zum einen bezeichnet man die Schergeschwindigkeit, bei der in der Fließkurve die über der Schubspannung aufgetragene Schergeschwindigkeit einen Sprung (Unstetigkeit) aufweist, als kritische Schergeschwindigkeit;
- zum anderen kann man das Aussehen des aus einem HKV austretenden Extrudat-Stranges beobachten: unterhalb der kritischen Schergeschwindigkeit ist dessen Oberfläche glatt, oberhalb derselben hingegen rauh; d.h., das bei steigender Schergeschwindigkeit (= steigendem Durchsatz) erstmalige Auftreten von Oberflächenrauhigkeit signalisiert, daß die kritische Schergeschwindigkeit erreicht ist.

Schwellrate

Die Schwellrate (Strangaufweitung) δD gibt an, um wieviel der Durchmesser des Extrudatstranges nach Verlassen der Düse größer ist als der Durchmesser der Düsenbohrung:

$$\delta D[\%] = \frac{\text{Durchmesser des Extrudates - Durchmesser der Düse}}{\text{Durchmesser der Düse}} \cdot 100$$

Die Formmassen gemäß der Erfindung lassen sich vorteilhaft stets dann verwenden, wenn ein Anheben der kritischen Schergeschwindigkeit zur Vermeidung unerwünschter Störungen in der Oberfläche von Formteilen erforderlich ist.

Bei der Extrusionsverarbeitung beispielsweise zu vakuumkalibrierten Profilen werden unter Bedingungen, unter denen herkömmliche Formmassen Schmelzenbruch und infolgedessen rauhe Oberflächen zeigen, mit Formmassen gemäß der Erfindung aber Formkörper erhalten, die sowohl innen wie außen einwandfrei glatte Oberflächen aufweisen. In ähnlicher Weise wurde beobachtet, daß während des Kalandrierens der Polymerschmelze bei den Massen gemäß der Erfindung kein "plate-out" auftrat und somit glatte Kalanderplatten resultieren.

Bei der Spritzgießverarbeitung lassen sich die Formmassen gemäß der Erfindung vorteilhaft zu Formkörpern mit einer im Verhältnis zum Gewicht großen Oberfläche verwenden, insbesondere zu behälterartigen Formteilen wie Feuerzeugkörpern oder Aerosolbehältern.

Beispiele

In den Beispielen wurden folgende Wachse verwendet:

Ca-stearat      $Ca(C_{17}H_{35}COO)_2$

Wachs 1      Polyethylen der Dichte 0,97 g/cm$^3$ und einer Viskosität von 300 mPas bei 140°C, gemessen nach DIN 51562

Wachs 2      Polares Polyethylen der Dichte 0,98 g/cm$^3$, einer bei 140°C nach DIN 51562 gemessenen Viskosität von 1500 mPas, einer nach DIN 53402 gemessenen Säurezahl von 25 mg KOH/g sowie einer nach DIN 53401 gemessenen Verseifungszahl von 40 mg KOH/g

Wachs 3      Polares Polyethylen der Dichte 0,97 g/cm$^3$, einer bei 140°C nach DIN 51562 gemessenen Viskosität von 4000 mPas, einer nach DIN 53402 gemessenen Säurezahl von 15 mg KOH/g sowie einer nach DIN 53401 gemessenen Verseifungszahl von 28 mg KOH/g

1. Ein Polyoxymethylen-Copolymer aus Trioxan und 2 % Ethylenoxid mit einem Schmelzindex MFI 190/2,16 von 2,5 g/10 Min wurde mit unterschiedlichen Mengen von Wachs 1 bei einem Ausstoß von 14 kg/h zu vakuumextrudierten Profilen extrudiert, wobei eine Schneckendrehzahl von 24 U·min$^{-1}$ eingestellt war.

Tabelle 1

| Konzentration an Wachs 1 [Gew.-%] | Druck [bar] | Extrudatoberfläche | |
|---|---|---|---|
| | | innen | außen |
| - | 262 | rauh | glatt |
| 0,0125 | 255 | leicht rauh | glatt |
| 0,025 | 246 | glatt | glatt |
| 0,05 | 230 | glatt | glatt |
| 0,1 | 200 | glatt | leicht rauh |
| 0,2 | <180 | glatt | rauh |

Mit nur 0,025 bis 0,05 Gew.-% PE-Wachs konnten Formkörper guter Qualität hergestellt werden. Eine Konzentration unter 0,003 Gew.-% erwies sich als unwirksam, Überdosierung führte wie bei den bekannten Wachsen zu schlechtem Förderverhalten.

2. Das Trioxan/Ethylenoxid-Copolymer aus Beispiel 1 wurde mit jeweils 0,1 Gew.-% Ca-stearat sowie den Wachsen 2 und 3 zu vakuumextrudierten Profilen extrudiert, der dabei auftretende Druck wurde gemessen; außerdem wurde dasselbe Copolymer, standardmäßig ausgerüstet mit 0,2 Gew.-% Bis-(N,N'-stearoyl)ethylendiamin, in gleicher Weise extrudiert; gegenüber diesem Standard (s. Tabelle 1, Versuch 1, ohne Wachs) zeigen die mit Additiven gemäß der Erfindung ausgerüsteten Materialien folgende Druckreduktionen:

Tabelle 2

| Additiv | Druckdifferenz [bar] |
|---|---|
| Ca-stearat | 22 |
| Wachs 2 | 80 |
| Wachs 3 | 130 |

Ca-stearat ist am wenigsten wirksam, die Wachse 2 und 3 bewirken deutlich größere Druckreduktionen.

**Patentansprüche**

1. Polyacetalformmasse, die mindestens ein Additiv enthält, dadurch gekennzeichnet, daß als wirksames Additiv 0,003 bis 0,15 Gew.-%, bezogen auf das Gewicht der Formmasse, Polyethylenwachs enthalten ist, mit der Maßgabe, daß Diphenylmethandiisocyanat nicht vorhanden ist.

2. Polyacetalformmasse nach Anspruch 1, dadurch gekennzeichnet, daß das Polyacetal ein Polyoxymethylen-Homopolymer oder ein Polyoxymethylen-Copolymer ist.

3. Polyacetalformmasse nach Ansprüchen 1 und 2, dadurch gekennzeichnet, daß sie 0,01 bis 0,12, insbesondere 0,02 bis 0,10 Gew.-%, bezogen auf das Gewicht der Formmasse, Polyethylenwachs enthält.

4. Polyacetalformmasse nach einem oder mehreren der Ansprüche 1 bis 3, dadurch gekennzeichnet, daß sie weitere übliche Zusätze in Form von Stabilisatoren, Füllstoffen, Schlagzähmodifikatoren, Verstärkungsmitteln und/oder Antistatika enthält.

5. Verwendung der Polyacetalformmasse nach einem oder mehreren der Ansprüche 1 bis 4 zur Herstellung von Formkörpern.

6. Verwendung nach Anspruch 5 als Feuerzeugkörper, Aerosolbehälter, Kalanderplatten oder vakuumkalibrierte Profile.

**Claims**

1. A polyacetal molding composition which comprises at least one additive, comprising, as the active additive, 0.003 to 0.15% by weight, based on the weight of the molding composition, of polyethylene wax, with the proviso that diphenylmethane diisocyanate is not present.

2. A polyacetal molding composition as claimed in claim 1, wherein the polyacetal is a polyoxymethylene homopolymer or a polyoxymethylene copolymer.

3. A polyacetal molding composition as claimed in claims 1 and 2, which comprises 0.01 to 0.12, in particular 0.02 to 0.10, % by weight, based on the weight of the molding composition, of polyethylene wax.

4. A polyacetal molding composition as claimed in one or more of claims 1 to 3, which comprises other customary additives in the form of stabilizers, fillers, impact modifiers, reinforcing agents and/or antistatics.

5. The use of a polyacetal molding composition as claimed in one or more of claims 1 to 4 for the production of shaped articles.

6. The use as claimed in claim 5, as cigarette lighter bodies, aerosol containers, calendered sheets or vacuum-calibrated profiles.


**Revendications**

1. Masse de moulage de polyacétal qui contient au moins un additif, caractérisée en ce qu'elle contient en tant qu'additif efficace la cire de polyéthylène dans une quantité de 0,003 à 0,15 % en poids par rapport au poids de la masse de moulage, de cire de polyéthylène, à la condition que le diphénylméthanediisocyante ne soit pas présent.

2. Masse de polyacétal selon la revendication 1, caractérisée en ce que le polyacétal est un homopolymère de polyoxyméthylène ou un copolymère de polyoxyméthylène.

3. Masse de polyacétal selon la revendication 1 et 2, caractérisé en ce qu'elle contient 0,01 à 0,12, plus particulièrement de 0,02 à 0,10 % en poids de cire de polyéthylène par rapport au poids de la masse de moulage.

4. Masse de polyacétal selon une ou plusieurs des revendications 1 à 3, caractérisée en ce qu'elle contient d'autres additifs usuels sous forme de stabilisants, de charges, d'agents modifiant la résiliance, de renforts et/ou antistatiques.

5. Utilisation de la masse de moulage de polyacétal selon une ou plusieurs des revendications 1 à 4, pour la préparation de corps moulés.

6. Utilisation selon la revendication 5, comme fours, conteneurs d'aérosol, plaques calandrées ou profilées calibrés sous vide.